# EUROPEAN PATENT APPLICATION

(11) **EP 2 180 622 A1**
(43) Date of publication of application: **28.04.2010**
(21) Application number: 08105620.2
(22) Date of filing: 21.10.2008
(51) Int. Cl.: H04J 14/02

(54) **A passive optical network and a method for identification of a subscriber in a passive optical network**

(71) Applicant: Nokia Siemens Networks OY, 02610 Espoo (FI)
(72) Inventor: Treyer, Thomas, 81379 München (DE)
(74) Representative: Bruglachner, Thomas E.

(57) **Abstract**

The present invention relates to a passive optical network (PON) comprising a plurality of optical filters (OF) which are provided between the optical splitter (SP) and the plurality of optical network units (ONU), wherein the attenuation profile over the wavelength range of the at least one optical filter (OF) arranged between the optical splitter (SP) and one of the optical network units (ONU) is different from the attenuation profiles of all other optical filters (OF) arranged between the optical splitter (SP) and a different one of the optical network units (ONU).

## Description

### Background of the Invention

The present invention relates to a passive optical network and a method for identification of a subscriber in a passive optical network (PON) comprising optical line terminals (OLT), optical network terminals (ONTs) and optical distribution networks (ODN) using point-to-multipoint (p2mp) fibers, wherein a single feeder fiber being connected to an OLT is split by an optical splitter (SP) into a plurality of optical lines (OL, drop fibers) being connected to an ONT.

An Optical Distribution Network (ODN) is an optical fibre cabling network in which the central part contains no active electronic devices. It is accessed by users and all of the user signals going upstream and downstream use only passive components such as optical dividers or splitters. The PON technology is a broadband access technology that has great competitive advantages and is an important technical means that offers user access over the last mile. By using passive optical components such as optical p2mp fibres as the medium for transmission, the technology has the advantage of high bandwidth, high immunity to electromagnetic interference, low loss, low cost, and simple design.

PONs do not use electrically powered components to split the signal. Instead, the signal is distributed using beam splitters. Each splitter typically splits a (feeder) fiber (FL) into a plurality of (drop) fibers, and several splitters can be aggregated in a single cabinet. A beam splitter cannot provide any switching or buffering capabilities; the resulting connection is called a point-to-multipoint (p2mp) link. For such a connection, the ONTs on the customer's (subscriber's) end have to perform certain functions which would not otherwise be required. For example, due to the absence of switching capabilities, each signal leaving the central office (OLT) must be broadcasted to all users served by that splitter including to those for whom the signal is not intended. It is therefore up to the ONT to filter out any signals intended for other subscribers. In addition, since beam splitters cannot perform buffering, each individual optical network terminal must be coordinated in a certain multiplexing scheme to prevent signals leaving the subscriber from colliding at the intersection. Two types of multiplexing are possible for achieving this: wavelenght-division multiplexing (WDM) and time-division multiplexing (TDM). According to the invention, in WDM each subscriber transmits their signal using a unique wavelength or wavelength range, i.e. the availble (transmittable) wavelength band is being subdivided into a plurality of subscriber-assigned wavelength ranges.

A PON is terminated by ONTs which are integrated electronic units that present standard interfaces to the user. An optical network unit (ONU) is the PON-side part of the ONT and may present one or more converged interfaces, such as xDSL or Ethernet, toward the user. An ONU typically requires a separate subscriber unit to provide native user services such as telephony, Ethernet data, or video. The counterpart to the ONU is the OLT, which is located in the Central Office of the network service provider. In a p2mp fiber plant (PON) the OLT controls many ONUs.

The interface between the PON and the backbone network is provided by OLTs. An OLT typically includes the Internet Protocol (IP) traffic over Gigabit, 10G, or 100 Mbit/s Ethernet, standard time division multiplexed interfaces such as SONET/SDH or PDH at various rates, or an ATM User-Network-Interface at 155-622 Mbit/s.

By using fixed access technologies like POTS, DSL or p2p fiber there is one access line per subscriber, and the carrier can rely on the association between physical line and subscriber identity. This reliable association is called "trust by wire" in the telecom industry. The non-ambiguous identification (assignment) of a subscriber with a physical line and user signals going upstream and downstream using said physical line may be necessary for sake of data security, data privacy protection and the like.

With p2mp fiber plants as used in PON access systems the non-ambiguous identification of a subscriber is lost as one feeder fiber in the central office connects multiple drop fibers (subscribers) using one or more optical power splitters. Therefore, when using p2mp fiber plants, it is not possible at the OLT-side part of the PON to non-ambiguously assign a certain subscriber to a certain physical line.

It is known in the prior art to establish the "trust by wire" characteristics by using a trusted ONU (ONT) at the subscriber's side. The ONU (ONT) contains a unique identification (ID), and this ID is visible in any communication between the ONU (ONT) and the central office (OLT).

However, the carrier has to deliver to the subscriber an ONU with a unique ID, and the carrier has furthermore to know exactly, which ID belongs to which subscriber. Both aspects result in high operational expenses (OPEX). Furthermore the subscriber (or someone else) may move the ONU from the subscriber's environment to another environment which cannot be detected by the OLT thereby causing the potential risk of untraceable identity theft. Furthermore, the ID inside the ONU can be manipulated.

Therefore an object of the invention is to provide a passive optical network and a method for identification of a subscriber in a passive optical network which overcome the above-mentioned disadvantages of the prior art.

### Summary of the Invention

To overcome the above-mentioned problems, according to an aspect of the invention a PON is disclosed, the PON comprising: at least one OLT, a plurality of ONTs, and a point-to-multipoint (p2mp) connection, wherein a single feeder fiber being connected to the at least one OLT is split by an optical splitter into a plurality of optical lines, each of the plurality of optical lines being connected to an ONT, and wherein the optical lines comprise a wavelength range for which each of the optical lines is adapted to transmit optical signals over a distance larger than predetermined distance and with an attenuation lower than a predetermined attenuation, and wherein each ONT comprises an ONU, each of the ONUs being adapted to provide one or more interfaces toward a corresponding subscriber, and wherein a plurality of optical filters are provided between the optical splitter and the plurality of ONUs, and wherein at least one optical filter is arranged between the optical splitter and each of the ONUs, and wherein the attenuation profile over the wavelength range of the at least one optical filter (OF) arranged between the optical splitter (SP) and one of the ONUs is different from the attenuation profiles of all other optical filters (OF) arranged between the optical splitter (SP) and a different one of the ONUs.

In other words, the present invention focuses on WDM systems in the access, where the ONU is tunable in a broader wavelength range. This allows to separate the WDM wavelength range into two areas (first and second portion). The main area (first portion) is used for regular service, and a smaller wavelength area is used for a passive spectral signature, i.e. a specific attenuation profile over the second portion of the wavelength range which can be non-ambiguously assigned to a certain subscriber and which thereby allows to non-ambiguously identify a certain subscriber.

This means that every output of the optical splitter comes with a different signature in the second portion of the wavelength range. The signature (or specific attenuation profile) is a wavelength-dependent attenuation, built-in into the (power) optical splitter of the PON. Alternatively, the means for establishing a specific attenuation profile may be provided between the optical splitter and each optical line which connects the optical splitter with the respective ONU, or even within an optical line or between an optical line and a respective ONU.

In a preferred embodiment of the invention, the means for establishing a specific attenuation profile may be formed of a multiple wavelengths notch filter adapted to attenuate in the second portion of the wavelength range.

If the OLT (subscriber) wants to determine the "trust-by-wire" identity of the ONU, the OLT directs the ONU to send (and receive) at wavelengths in the second portion. In this identification mode the OLT and ONU can measure the wavelength-dependent attenuation (attenuation profile) in the second portion by scanning the complete second portion of the wavelength range. This allows the OLT to read out the passive signature of the drop fiber (optical line between the splitter and a subscriber assigned ONU), thereby identifying the subscriber's access line (optical line) and thereby non-ambiguously identifying the subscriber itself.

Preferably the maximum attenuation of each of the plurality of optical filters (OF) in the first portion is lower than a predetermined value and the maximum attenuation of each of the plurality of optical filters (OF) in the second portion is higher than a predetermined value. In other words, in the service wavelength area (first portion) the optical filters providing the signature have no or low attenuation. More preferably, the maximum attenuation of each of the plurality of optical filters (OF) in the first portion is lower than 15 dB (still more preferably lower than 10 dB) and the maximum attenuation of each of the plurality of optical filters (OF) in the second portion is higher than 15 dB, still more preferably higher than 20 dB.

Preferably the first portion of the wavelength range extends over more than 80% of the wavelength range and the second portion of the wavelength range extends over less than 20% of the wavelength range. Preferably the first portion is located adjacent to the second portion. More preferably the first portion of the wavelength range extends over more than 90% of the wavelength range and the second portion of the wavelength range extends over less than 10% of the wavelength range. The preferred division of the ranges allows to use a broad range of the available spectrum for regular services.

Preferably the plurality of optical filters (OF) are integrated in the optical splitter (SP). Preferably the optical filters (OF) are configured to be notch filters. Preferably the second portion of the wavelength range is divided into a plurality of wavelength sub-ranges, and a plurality of notch filters is used for each of the optical filters (OF), wherein each of the notch filters comprises a maximum attenuation higher than a predetermined value in one of the wavelength sub-ranges and a maximum attenuation lower than a predetermined value in the other wavelength sub-ranges and in the first portion of the wavelength range, thereby enabling coding scheme as discussed below in more detail.

The signature wavelength filter is preferably located in a trusted environment at the subscriber-facing output of the power splitter. It can be part of the power splitter or part of the drop fiber. Every signature has a characteristic wavelength/attenuation profile in the signature wavelength area (second portion), which differentiates it from any other signature in the same PON. If the PON has a splitting ratio of 1:SR, SR different signatures are needed.

In a preferred embodiment of the invention the signature comprises a plurality of notch filters, where the attenuation at characteristic wavelengths is high (over a predetermined value) and is low (lower than a predetermined value) at all other wavelengths. Notch filters may be formed by a fiber grating or by a grating structure in planar waveguides.

In a preferred embodiment of the invention the notch filters are used to form a "n out of m" code (n<m), where the notch filters can be placed at m different wavelengths within the second portion, and for every drop fiber n of these wavelengths positions are marked with a notch filter.

Preferably the number (m) of wavelength sub-ranges in the second portion of the wavelength range ranges between 4 and 12 and the number (n) of notch filters for each of the optical filters (OF) ranges between 2 and 6. Preferably the plurality of wavelength sub-ranges is arranged periodically in the second portion of the wavelength range and the periodicity of the plurality of notch filters corresponds with the widths of the sub-ranges.

According to another aspect of the invention, a method for identification of a subscriber in a passive optical network (as defined above) is disclosed, the method comprising the steps of:
- dividing a wavelength range of the optical lines (OL) which is provided for optical signal transmission into a first portion and a second portion, wherein the first portion of the wavelength range is used for data exchange between the at least one optical line terminal (OLT) and each of the subscribers using at least one of the interfaces provided by the corresponding optical network unit (ONUs),
- transmitting a predetermined optical signal within the second portion of the wavelength range from an optical network unit (ONU) of a subscriber to the at least one optical line terminal (OLT),
- determining the attenuation profile over the second portion of the wavelength range by comparing the predetermined optical signal and the transmitted optical signal,
- identifying the subscriber according to attenuation profile over the second portion of the wavelength range received by the at least one optical line terminal (OLT).

The present invention uses WDM (wavelength multiplexing method) systems in the access, where the ONU is tunable in a broader wavelength range which allows to separate the WDM wavelength range into two areas (first and second portion) while the main area (first portion) is used for regular service, and a smaller wavelength area is used for a passive spectral signature, i.e. a specific attenuation profile over the second portion of the wavelength range which can non-ambiguously be assigned to a certain subscriber and which allows to non-ambiguously identify a certain subscriber.

Preferably, for each of the plurality of optical lines (OL) a predetermined attenuation profile over the second portion is established by providing at least one optical filter (OF) between the optical splitter (SP) and the plurality of optical network units (ONU) corresponding to each optical line (OL).

Preferably the signature wavelength area is periodic. This allows to use the optical (power) splitter behind a CWDM (coarse WDM) splitter, if the periodicity of the notch filters corresponds with the width of the CWDM bands. The CWDM splitter is adapted to split a single band (such as the C band) into a plurality of sub-bands (e.g. between 8 and 16 sub-bands).

Preferably, each optical network unit (ONU) is adapted to receive a request signal transmitted within the first portion of the wavelength range and to transmit a predetermined optical signal within the second portion of the wavelength range to the at least one optical line terminal (OLT). Then, the OLT is not obliged to send light in the signature wavelength range. According to the request signal, the ONU sends a signal upstream and modifies the wavelength during transmission from one end of the signature wavelength area to the other. The OLT locks to this signal and measures the attenuation. In this variant the signature is completely hidden from the ONU

Alternatively, the scan of the signature wavelength area is guided by the OLT, which sends a downstream signal continuously. The OLT modifies continuously the wavelength to scan the signature, and the ONU follows the OLT wavelength. The ONU mirrors the downstream signal (or a checksum of the downstream signal) in upstream direction. As long as the OLT receives its own signal from the ONU, the attenuation at the specific wavelength is measured as low. If the OLT receives no signal, the attenuation at the specific wavelength is high. In this embodiment the OLT and the ONU can read out the signature.

The new solution and their advantages will be explained by help of Fig. 1 to 3:
- Fig. 1: shows the tree topology of a PON according to a first embodiment of the invention,
- Fig. 2: shows the tree topology of a PON according to a second embodiment of the invention,
- Fig. 3: shows the division of the wavelength band according to an embodiment of the present invention, and
- Fig. 4: shows the division of the wavelength band according to another embodiment of the present invention.

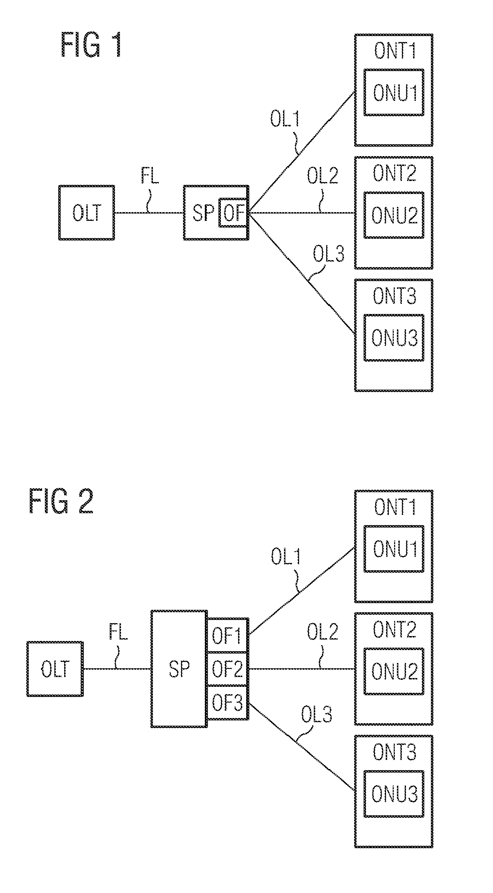

Starting point of the new solution is a topology as shown in Fig. 1. The PON comprises at least one optical line terminal OLT and a plurality of optical network terminals ONT1-ONT3 which are connected to the OLT by a point-to-multipoint connection (p2mp), wherein a single feeder fiber FL is connected to the at least one optical line terminal OLT and the single feeder fiber FL is split by the optical splitter SP into a plurality of optical lines OL1-OL3, each of the plurality of optical lines OL1-OL3 being connected to a respective optical network terminal ONT1-ONT3. Each of ONT1-ONT3 comprises an optical network unit ONU1-ONU3 being adapted to provide one or more interfaces toward a certain subscriber.

According to the present invention which is directed to WDM systems in the access, the expression wavelength range is understood as a wavelength range for which each of the optical lines (OL) is adapted to transmit optical signals over a distance larger than predetermined distance and with an attenuation lower than a predetermined attenuation. The physical properties of the optical lines may vary according to the physical dimension of the optical lines, however it should be understood that the wavelength range is a range in which optical signals can be transmitted with an attenuation being less than a desired predetermined value. Furthermore, the wavelength range is not necessarily understood as a range over which a transmission with an attenuation being less than a desired predetermined value is generally possible, but as a range over which OLT and ONU are adapted (or programmed) to transmit their signals with an attenuation being less than a desired predetermined value. The plurality of optical lines OL1-OL3 may be formed to be for example G.652.C and .D compliant fibers.

In order to discriminate and identify the subscribers being assigned to the different optical lines OL1-OL3 the invention proposes a plurality of optical filters OF being provided between the optical splitter SP and the plurality of optical network units ONU1-ONU3, wherein the attenuation profile over the (second portion of the) wavelength range of the at least one optical filter OF arranged between the optical splitter SP and one of the optical network units ONU1-ONU3 is different from the attenuation profiles of all other optical filters OF arranged between the optical splitter SP and a different one of the optical network units ONU1-ONU3.

In the embodiment of Fig. 1 the optical filters OF are integrated in the splitter SP and adapted to provide different attenuation profiles for the second portion of the wavelength range for each connection between SP and the optical network units ONU1-ONU3. Alternatively, it is possible that the optical filters OF1-OF3 are arranged somewhere else between the splitter SP and the plurality of ONU1-ONU3.

In a typical PON the power splitters realize a splitting ratio of 16...128. The splitters are located in splitter cabinets, man holes or central offices and can be treated as trusted equipment.

The signature wavelength filter(s) OF, OF1-OF3 are located in such a trusted environment at the subscriber-facing output of the power splitter. It can be part of the power splitter (Fig. 1) or part of the drop fiber OL1-OL3 (Fig. 2) or connected between SP and OL. Every signature has a characteristic wavelength/attenuation profile in the signature wavelength area, which differentiates it from any other signature in the same PON. If the PON has a splitting ratio of 1:SR, SR different signatures are needed.

In a preferred embodiment of the invention the signature consists of notch filters, where the attenuation at characteristic wavelengths is high and is low at all other wavelengths. More preferably, the notch filters are used to form a "n out of m" code (n<m), where the notch filters can be placed at m different wavelengths, and for every drop fiber n of these wavelengths positions are marked with a notch filter. For example, a "4 out of 8" code can code 56 different drop fibers. The "n out of m" code has the advantage, that a malicious ONU cannot fake a wrong identity, because the ONU can fake additional notch filters only, but cannot hide the existing notch filters. Another advantage is that a high number of drop fibers can be identified with a small number of notch filters. For example a "3 out of 12" code needs 3 notch filters per drop fiber only, but can produces a unique signature for 220 drop fibers.

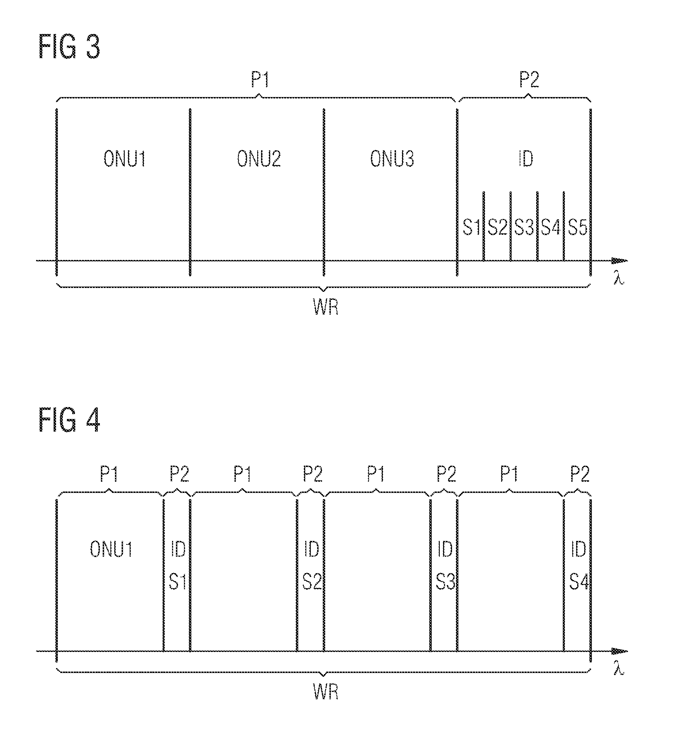

The above explained division of the wavelength range is illustrated in Fig. 3 in which WR embodies the wavelength range which is used for the optical signal exchange between OLT and the plurality of ONUs (ONU1-ONU3). According to this embodiment of the invention, the wavelength range WR is divided into a first portion P1 which is used for regular service, i.e. for regular signal exchange between OLT and the plurality of ONUs. Preferably, the first portion P1 is subdivided into a plurality of equidistant portions being reserved for the plurality of ONUs (ONU1-ONU3), assigning different wavelength bands to different ONUs in order to provide WDM data transmission. A smaller wavelength area P2 is used for a passive spectral signature. In particular, the second portion P2 is divided into a plurality of wavelength sub-ranges S1-S5, and a plurality of notch filters is used for each of the optical filters OF (OF1-OF3), wherein each of the notch filters comprises a maximum attenuation higher than a predetermined value in one of the wavelength sub-ranges S1-S5 and a maximum attenuation lower than the predetermined value in the other wavelength sub-ranges S1-S5 and in the first portion of the wavelength range. Thus, placing the notch filters at m wavelength sub-ranges (e.g. S1-S5), and using for every drop fiber n of these wavelengths positions with a notch filter, a coding of the different drop fibers (e.g. OL1-OL3) using "n out of m" coding becomes possible.

An alternative preferred embodiment showing the division of the wavelength range is illustrated in Fig. 4 in which WR embodies the wavelength range which is used for the optical signal exchange between OLT and the plurality of ONUs (ONU1-ONU3). According to this embodiment of the invention, the wavelength range WR is divided into a first portion comprising a plurality of first sub-portions P1 which is used for regular service, i.e. for regular signal exchange between OLT and the plurality of ONUs. Preferably, the first portion P1 is subdivided into a plurality of equidistant portions being reserved for the plurality of ONUs (ONU1-ONU3), assigning different wavelength bands to different ONUs in order to provide WDM data transmission which are in comparion to the embodiment of Fig. 3 not arranged adjacent to one antoher but which are arranged periodically along the wavelength range WR. A smaller wavelength area, i.e. a plurality of sub-ranges of the second portion (defined by the plurality of P2) are used for a passive spectral signature. In particular, the second portion is divided into a plurality of wavelength sub-ranges S1-S4, and a periodical filter or a plurality of notch filters is used for each of the optical filters OF (OF1-OF3), wherein each of the notch filters comprises a maximum attenuation higher than a predetermined value in one of the wavelength sub-ranges S1-S4 and a maximum attenuation lower than the predetermined value in the other wavelength sub-ranges S1-S4 and in the first portion of the wavelength range. Thus, placing the notch filters at m wavelength sub-ranges (e.g. S1-S4), and using for every drop fiber n of these wavelengths positions with a notch filter, a coding of the different drop fibers (e.g. OL1-OL3) using "n out of m" coding becomes possible. According to this embodiment, the sub-ranges of the first portion and the sub-ranges of the second portion are arranged adjacent to one another. Thus, the plurality of wavelength sub-ranges S1-S4 is arranged periodically along the wavelength range WR and the periodicity of the (plurality of) notch filter(s) corresponds with the widths of the sum of each of adjacent ranges P1 and P2.

Commercially available periodical optical filter are preferably formed by Fabry-Perot-filters which may comprise certain filtering characteristics being present in periodical areas of the wavelength range.

In a further preferred embodiment of the invention the notch filters may show a wavelength drift due to temperature or ageing. This drift is compensated by the OLT/ONU by scanning the complete signature wavelength range P2. Depending on the maximum drift value, the OLT can compensate the drift as explained below: If the determined drift is smaller than the spacing of the notch filters, the measured attenuation peaks can be associated directly to notch filter positions. If the determined drift is larger than the spacing of the notch filters, a pattern recognition of the result is used to compensate the drift. In particular, according to a preferred embodiment an additional notch filter is introduced, which exist in all drop fibers (e.g. OL1-OL3) and which allows the pattern recognition to identify the first or last notch filter position easily.

Alternatively (or even additionally) it is preferred that the modifications of the "n out of m" code is made such that the pattern is unique, even if it is shifted by wavelength.
All of these drift compensation techniques offer the advantage, that the production cost of the notch filters can be significantly reduced. These features do not compensate drift only, but compensate also initial manufacturing tolerances.

### References

- OL1-OL3: Optical Line
- OLT1-OLT3: Optical Line Terminal
- ONT1-ONT3: Optical Network Terminal
- ONU1-3: Optical Network Unit
- PON: Passive Optical Network
- SP: Optical Splitter
- FL: Feeder Fiber
- OF, OF1-OF3: Optical Filter
- ID: Identification Range
- WR: Wavelength Range of Optical Lines
- P1: First Portion of Wavelength Range
- P2: Second Portion of Wavelength Range
- S1-S5: Wavelength Sub-Ranges of the Second Portion

## Claims

1. A passive optical network (PON) comprising:
at least one optical line terminal (OLT),
a plurality of optical network terminals (ONTs), and
an optical distribution network (ODN) connecting the at least one optical line terminal (OLT) with the plurality of optical network terminals (ONTs), the optical distribution network comprising a point-to-multipoint (p2mp) connection, wherein a single feeder fiber being connected to the at least one optical line terminal (OLT) is split by an optical splitter (SP) into a plurality of optical lines (OL), each of the plurality of optical lines (OL) being connected to an optical network terminal (ONT), and wherein the optical lines (OL) comprise a wavelength range for which each of the optical lines (OL) is adapted to transmit optical signals over a distance larger than predetermined distance and with an attenuation lower than a predetermined attenuation, and
wherein each optical network terminal (ONT) comprises an optical network unit (ONU), each of the optical network units (ONUs) being adapted to provide one or more interfaces toward a corresponding subscriber,
**characterised in that**
a plurality of optical filters (OF) are provided between the optical splitter (SP) and the plurality of optical network units (ONU), wherein at least one optical filter (OF) is arranged between the optical splitter (SP) and each of the optical network units (ONU), and wherein the attenuation profile over the wavelength range of the at least one optical filter (OF) arranged between the optical splitter (SP) and one of the optical network units (ONU) is different from the attenuation profile of all other optical filters (OF) arranged between the optical splitter (SP) and a different one of the optical network units (ONU).

2. A passive optical network (PON) according to claim 1, wherein the wavelength range is divided into a first portion and a second portion, and wherein the maximum attenuation of each of the plurality of optical filters (OF) in the first portion is lower than a predetermined value and the maximum attenuation of each of the plurality of optical filters (OF) in the second portion is higher than the predetermined value.

3. A passive optical network (PON) according to claim 2, wherein the first portion of the wavelength range extends over more than 80% of the wavelength range and the second portion of the wavelength range extends over less than 20% of the wavelength range.

4. A passive optical network (PON) according to one of the preceding claims, wherein the plurality of optical filters (OF) are integrated in the optical splitter (SP).

5. A passive optical network (PON) according to one of the preceding claims, wherein the optical filters (OF) are configured to comprise at least one notch filter.

6. A passive optical network (PON) according to one of claims 2-5, wherein the second portion of the wavelength range is divided into a plurality of wavelength sub-ranges, and a plurality of notch filters is used for each of the optical filters (OF), wherein each of the notch filters comprises a maximum attenuation higher than a predetermined value in one of the wavelength sub-ranges and a maximum attenuation lower than the predetermined value in the other wavelength sub-ranges and in the first portion of the wavelength range.

7. A passive optical network (PON) according to claim 6, wherein the number of wavelength sub-ranges in the second portion of the wavelength range ranges between 4 and 12 and the number of notch filters for each of the optical filters (OF) ranges between 2 and 6.

8. A passive optical network (PON) according to one of the claims 2-7, wherein wherein the first portion of the wavelength range is divided into a plurality of wavelength sub-ranges (P1) and the second portion of the wavelength range is divided into a plurality of wavelength sub-ranges (P2, S1-S4) and a plurality of notch filters is used for each of the optical filters (OF), and each of the notch filters comprises a maximum attenuation higher than a predetermined value in one of the wavelength sub-ranges (S1-S4) of the second portion (P2) and a maximum attenuation lower than the predetermined value in the wavelength sub-ranges (P1) of the first portion of the wavelength range (WR), and the wavelength range (WR) is alternatively devided into sub-ranges (P1) of the first portion and sub-ranges (P2) of the second portion being arranged adjacent to one another, wherein the periodicity of the plurality of notch filters corresponds with the widths of a range comprising a sub-range (P1) of the first portion and an adjacent sub-range (P2) of the second portion.

9. A method for identification of a subscriber in a passive optical network (PON), the passive optical network (PON) comprising at least one optical line terminal (OLT), a plurality of optical network terminals (ONTs), and a point-to-multipoint (p2mp) connection, wherein a single feeder fiber being connected to the at least one optical line terminal (OLT) is split by an optical splitter (SP) into a plurality of optical lines (OL), each of the plurality of optical lines (OL) being connected to an optical network terminal (ONT), wherein each optical network terminal (ONT) comprises an optical network unit (ONU), each of the optical network units (ONUs) being adapted to provide one or more interfaces toward a corresponding subscriber, the method comprising:
- dividing a wavelength range of the optical lines (OL) which is provided for optical signal transmission into a first portion and a second portion, wherein the first portion of the wavelength range is used for data exchange between the at least one optical line terminal (OLT) and each of the subscribers using at least one of the interfaces provided by the corresponding optical network unit (ONUs),
- transmitting a predetermined optical signal within the second portion of the wavelength range from an optical network unit (ONU) of a subscriber to the at least one optical line terminal (OLT),
- determining the attenuation profile over the second portion of the wavelength range by comparing the predetermined optical signal and the transmitted optical signal,
- identifying the subscriber according to attenuation profile over the second portion of the wavelength range received by the at least one optical line terminal (OLT).

10. The method according to claim 9, wherein wavelength range is divided such that the first portion extends over more than 80% of the wavelength range and the second portion extends over less than 20% of the wavelength range.

11. The method according to one of claims 9 and 10, wherein for each of the plurality of optical lines (OL) a predetermined attenuation profile over the second portion is established by providing at least one optical filter (OF) between the optical splitter (SP) and the plurality of optical network units (ONU) corresponding to each optical line (OL).

12. The method according to one of claims 9 - 11, wherein the optical connections between the optical splitter (SP) and each of the plurality of optical network units (ONU) are adapted to have a different attenuation profile over the second portion of the wavelength and each of the plurality of subscribers is identified according to its specific attenuation profile.

13. The method according to one of claims 9 - 12, wherein each optical network unit (ONU) is adapted to receive a request signal transmitted within the first portion of the wavelength range and to transmit a predetermined optical signal within the second portion of the wavelength range to the at least one optical line terminal (OLT), in response to the request signal.

14. The method according to one of claims 9 - 12, wherein each optical network unit (ONU) is adapted to receive a request signal transmitted within the second portion of the wavelength range and to transmit a predetermined optical signal within the second portion of the wavelength range to the at least one optical line terminal (OLT), in response to the request signal.
